(19) **Europäisches Patentamt**
**European Patent Office**
**Office européen des brevets**

(11) **EP 4 404 080 A1**

(12) **EUROPEAN PATENT APPLICATION**
published in accordance with Art. 153(4) EPC

(43) Date of publication:
**24.07.2024 Bulletin 2024/30**

(21) Application number: **22880379.7**

(22) Date of filing: **13.10.2022**

(51) International Patent Classification (IPC):
***G06F 16/33*** **(2019.01)**

(52) Cooperative Patent Classification (CPC):
**G06F 16/33; G06F 16/332; G06F 18/214;
G06N 3/02**

(86) International application number:
**PCT/CN2022/125088**

(87) International publication number:
**WO 2023/061443 (20.04.2023 Gazette 2023/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.10.2021 CN 202111205658**

(71) Applicant: **Huawei Technologies Co., Ltd.
Shenzhen, Guangdong 518129 (CN)**

(72) Inventors:
• **HE, Bin**
**Shenzhen, Guangdong 518129 (CN)**
• **WANG, Yasheng**
**Shenzhen, Guangdong 518129 (CN)**
• **LI, Yitong**
**Shenzhen, Guangdong 518129 (CN)**
• **MI, Fei**
**Shenzhen, Guangdong 518129 (CN)**

(74) Representative: **Gill Jennings & Every LLP
The Broadgate Tower
20 Primrose Street
London EC2A 2ES (GB)**

(54) **METHOD AND APPARATUS FOR DETERMINING REPLY STATEMENT**

(57) This application discloses a response determining method. The method includes: obtaining a to-be-responded first user statement; determining first state information of the first user statement based on the first user statement by using a state determining network, where the first state information includes a first dialog type of the first user statement; and inputting the first user statement and the first dialog type into a response generation network, to obtain a response corresponding to the first user statement. In this application, a dialog type of a user dialog is identified by using the state determining network, and responses corresponding to different dialog types are generated by reusing the dialog generation network, which is equivalent to processing user statements of different dialog types by using a same model, thereby reducing model complexity and a model size of a dialog system.

EP 4 404 080 A1

```
┌─────────────────────────────────────────────────┐
│   Obtain a to-be-responded first user statement  │ ─ 301
└─────────────────────────────────────────────────┘
                        │
                        ▼
┌─────────────────────────────────────────────────┐
│ Determine first state information of the first    │ ─ 302
│ user statement based on the first user statement  │
│ by using a state determining network, where the   │
│ first state information includes a first dialog    │
│ type of the first user statement, and the first    │
│ dialog type is a chit-chat dialog, a task-oriented │
│ dialog, a question answering dialog, or a          │
│ retrieval dialog                                   │
└─────────────────────────────────────────────────┘
                        │
                        ▼
┌─────────────────────────────────────────────────┐
│ Input the first user statement and the first dialog│ ─ 303
│ type into a response generation network, to obtain │
│ a response corresponding to the first user         │
│ statement                                          │
└─────────────────────────────────────────────────┘
```

FIG. 3

**Description**

This application claims priority to Chinese Patent Application No. 202111205658.2, filed with the China National Intellectual Property Administration on October 15, 2021 and entitled "RESPONSE DETERMINING METHOD AND APPARATUS", which is incorporated herein by reference in its entirety.

**TECHNICAL FIELD**

This application relates to the artificial intelligence field, and in particular, to a response determining method and apparatus.

**BACKGROUND**

Artificial intelligence (artificial intelligence, AI) is a theory, a method, a technology, or an application system that simulates, extends, and expands human intelligence by using a digital computer or a machine controlled by a digital computer, to perceive an environment, obtain knowledge, and achieve an optimal result based on the knowledge. In other words, artificial intelligence is a branch of computer science, and is intended to understand the essence of intelligence and produce a new intelligent machine that can react in a manner similar to human intelligence. Artificial intelligence is to study design principles and implementation methods of various intelligent machines, so that the machines have perception, inference, and decision-making functions.

A dialog system has a plurality of dialog types, for example, a chit-chat dialog (mainly for entertainment and escort), a task-oriented dialog (for meeting specific requirements of users, such as ticket booking and hotel booking), and a question answering dialog (providing knowledge-related services for users and answering questions of the users). With development of deep learning, the dialog system has made great progress.

In a conventional implementation, to enable the dialog system to simultaneously cope with user dialogs of the plurality of dialog types, a dialog model corresponding to each dialog type is separately trained, and different dialog models are organized together in an integrated manner to construct a multi-functional dialog system. However, the dialog system has a complex system structure and occupies large storage space.

**SUMMARY**

This application provides a response determining method. A dialog type of a user dialog is identified by using a state determining network, and responses corresponding to different dialog types are generated by reusing a dialog generation network, which is equivalent to processing user statements of different dialog types by using a same model, thereby reducing model complexity and a model size of a dialog system.

According to a first aspect, this application provides a response determining method. The method includes: obtaining a to-be-responded first user statement.

In a possible implementation, the first user statement may be a text, such as a question or a request, input by a user to a question answering device. For example, the user may input a target question into the question answering device in a text form. In this case, the question answering device may directly obtain the first user statement in the text form. The user may further input a target question into the question answering device in a speech form. In this case, the question answering device may convert received speech information into text information, to obtain the first user statement in the text form. The user may further input a target question into the question answering device by using a body language. In this case, the question answering device captures and analyzes body movement of the user, and identifies the first user statement in the text form.

The method includes: determining first state information of the first user statement based on the first user statement by using a state determining network, where the first state information includes a first dialog type of the first user statement, and the first dialog type is a chit-chat dialog, a task-oriented dialog, a question answering dialog, or a retrieval dialog.

The state determining network may be trained and has a capability of determining a corresponding dialog type based on a user statement.

It should be understood that, the state determining network has a capability of identifying the four dialog types (the chit-chat dialog, the task-oriented dialog, the question answering dialog, and the retrieval dialog), and the state determining network may have a capability of identifying at least two of the four dialog types. This is not limited in this application.

It should be understood that, when the dialog type is determined, input of the state determining network may be the first user statement (optionally, may further include another historical statement of the user). This is not limited herein.

It should be understood that the dialog type may also be referred to as a dialog belief state (belief state).

The chit-chat dialog may also be referred to as a chat dialog.

The state determining network may be a part of a GPT model or a complete GPT model, a response generation network may be a part of a DialoGPT model or a complete DialoGPT model, a response generation network may be a part of a BART model or a complete BART model, or a response generation network may be a part of a T5 model or a complete T5 model.

The method further includes: inputting the first user statement and the first dialog type into a response generation network, to obtain a response corresponding to the first user statement.

In a possible implementation, the response generation network may be a GPT model, a DialoGPT model, a BART model, or a T5 model. The response generation network may be a part of the GPT model or the complete GPT model, the response generation network may be a part of the DialoGPT model or the complete DialoGPT model, the response generation network may be a part of the BART model or the complete BART model, or the response generation network may be a part of the T5 model or the complete T5 model.

Optionally, the state determining network and the response generation network in this embodiment of this application may be two parts of a same network, or may be different networks.

It should be understood that the response generation network may further generate the response of the first user statement based on another user historical statement other than the first user statement. This is not limited herein.

It should be understood that user statements of different dialog types may be used as input of a same response generation network to obtain a response.

In this embodiment of this application, a dialog type of a user dialog is identified by using the state determining network, and responses corresponding to different dialog types are generated by reusing the dialog generation network, which is equivalent to processing user statements of different dialog types by using a same model. During model training, modes of a plurality of dialog types can be unified, so that the plurality of dialog types can be trained at the same time, and a trained dialog system has a capability of a plurality of dialog types, thereby reducing model complexity and a model size of the dialog system.

In a possible implementation, the first state information may further include slot information, and the slot information may be a keyword in the first user statement.

In a possible implementation, the determining first state information of the first user statement based on the first user statement by using a state determining network includes: determining the first dialog type of the first user statement from a plurality of dialog types by using a state determining network, where the plurality of dialog types includes at least two of the chit-chat dialog, the task-oriented dialog, the question answering dialog, and the retrieval dialog.

In a possible implementation, the first dialog type of the first user statement can be determined from the plurality of dialog types by using the state determining network, where the plurality of dialog types includes at least two of the chit-chat dialog, the task-oriented dialog, the question answering dialog, and the retrieval dialog.

For example, the plurality of dialog types include the chit-chat dialog and the task-oriented dialog.

For example, the plurality of dialog types include the chit-chat dialog and the question answering dialog.

For example, the plurality of dialog types include the chit-chat dialog and the retrieval dialog.

For example, the plurality of dialog types include the task-oriented dialog and the question answering dialog.

For example, the plurality of dialog types include the task-oriented dialog and the retrieval dialog.

For example, the plurality of dialog types include the question answering dialog and the retrieval dialog.

For example, the plurality of dialog types include the chit-chat dialog, the task-oriented dialog, and the question answering dialog.

For example, the plurality of dialog types include the chit-chat dialog, the task-oriented dialog, and the retrieval dialog.

For example, the plurality of dialog types include the task-oriented dialog, the question answering dialog, and the retrieval dialog.

For example, the plurality of dialog types include the chit-chat dialog, the task-oriented dialog, the question answering dialog, and the retrieval dialog.

In this embodiment of this application, the responses corresponding to different dialog types can be generated by reusing the dialog generation network in this embodiment of this application. In a possible implementation, the method further includes: obtaining a to-be-responded second user statement; determining second state information of the second user statement based on the second user statement by using the state determining network, where the second state information includes a second dialog type of the second user statement, the second dialog type is a chit-chat dialog, a task-oriented dialog, a question answering dialog, or a retrieval dialog, and the second dialog type is different from the first dialog type; and inputting the second user statement and the second dialog type into the response generation network, to obtain a response corresponding to the second user statement.

In a possible implementation, the state determining network and the response generation network each are a GPT model, a DialoGPT model, a BART model, or a T5 model. The state determining network and the response generation network each are a complete GPT model, DialoGPT model, BART model, or T5 model; or the state determining network and the response generation network may be models of similar network structures or network performance having the GPT model, the DialoGPT model, the BART model, or the T5 model. This is not limited in this application. For example, the state determining network and the response generation network each may be a part of the GPT model, the DialoGPT model, the BART model, or the T5 model.

In a possible implementation, a dialog system may obtain, from the first user statement or a database based on the first user statement, a keyword or a key sentence for constructing the response; and input the first user statement, the first dialog type, and the keyword or the key sentence into the response generation network, to obtain the response corresponding to the first user statement.

In this embodiment of this application, data or text content related to a dialog can be obtained from an external resource such as an external database/a knowledge base/a corpus based on the first user statement and the first dialog type, and is used as dialog information (namely, the keyword or key sentence) to join a dialog process.

In a possible implementation, the method further includes: inputting the first user statement and the first dialog type into a response generation network, to obtain a response corresponding to the first user statement; or inputting the first user statement, the first dialog type, and the keyword or the key sentence into the response generation network, to obtain the response corresponding to the first user statement.

According to a second aspect, this application provides a response determining method. The method includes:

obtaining a first user statement, a first dialog type of the first user statement, and a first response corresponding to the first user statement, where the first dialog type is a real type of the first user statement, and the first dialog type is a chit-chat dialog, a task-oriented dialog, a question answering dialog, or a retrieval dialog;

determining first state information of the first user statement based on the first user statement by using a state determining network, where the first state information includes a second dialog type of the first user statement;

inputting the first user statement and the first dialog type into a response generation network, to obtain a second response corresponding to the first user statement;

updating the state determining network based on a difference between the first dialog type and the second dialog type; and

updating the response generation network based on a difference between the first response and the second response.

In this application, a dialog type of a user dialog is identified by using the state determining network, and responses corresponding to different dialog types are generated by reusing the dialog generation network, which is equivalent to processing user statements of different dialog types by using a same model. During model training, modes of a plurality of dialog types can be unified, so that the plurality of dialog types can be trained at the same time, and a trained dialog system has a capability of a plurality of dialog types, thereby reducing model complexity and a model size of the dialog system.

In a possible implementation, the determining first state information of the first user statement based on the first user statement by using a state determining network includes:

determining the second dialog type of the first user statement from a plurality of dialog types by using the state determining network, where the plurality of dialog types include at least two of the chit-chat dialog, the task-oriented dialog, the question answering dialog, and the retrieval dialog.

In a possible implementation, the method further includes:

obtaining a second user statement, a third dialog type of the second user statement, and a third response corresponding to the second user statement, where the third dialog type is a real type of the second user statement;

determining second state information of the second user statement based on the second user statement by using the state determining network, where the second state information includes a fourth dialog type of the second user statement, and the fourth dialog type is different from the third dialog type;

inputting the second user statement and the third dialog type into the response generation network, to obtain a fourth response corresponding to the second user statement;

updating the state determining network based on a difference between the fourth dialog type and the third dialog type; and

updating the response generation network based on a difference between the fourth response and the third response.

In a possible implementation, the state determining network and the response generation network each are a GPT model, a DialoGPT model, a BART model, or a T5 model.

In a possible implementation, the inputting the first user statement and the first dialog type into a response generation network, to obtain a second response corresponding to the first user statement includes:

obtaining, from the first user statement or a database based on the first user statement, a keyword or a key sentence for constructing the response; and

inputting the first user statement, the first dialog type, and the keyword or the key sentence into the response generation network, to obtain the second response corresponding to the first user statement.

According to a third aspect, this application provides a response determining apparatus. The apparatus includes:

an obtaining module, configured to obtain a to-be-responded first user statement;

a state generation module, configured to determine first state information of the first user statement based on the first user statement by using a state determining network, where the first state information includes a first dialog type of the first user statement, and the first dialog type is a chit-chat dialog, a task-oriented dialog, a question answering dialog, or a retrieval dialog; and

a response generation module, configured to input the first user statement and the first dialog type into a response generation network, to obtain a response corresponding to the first user statement.

This application provides a response determining apparatus. The apparatus includes: the obtaining module, configured to obtain the to-be-responded first user statement; the state generation module, configured to determine the first state information of the first user statement based on the first user statement by using the state determining network, where the first state information includes the first dialog type of the first user statement, and the first dialog type is the chit-chat dialog, the task-oriented dialog, the question answering dialog, or the retrieval dialog; and the response generation module, configured to input the first user statement and the first dialog type into the response generation network, to obtain the response corresponding to the first user statement. A dialog type of a user dialog is identified by using the state determining network, and responses corresponding to different dialog types are generated by reusing the dialog generation network, which is equivalent to processing user statements of different dialog types by using a same model. During model training, modes of a plurality of dialog types can be unified, so that the plurality of dialog types can be trained at the same time, and a trained dialog system has a capability of a plurality of dialog types, thereby reducing model complexity and a model size of the dialog system.

In a possible implementation, the state generation module is specifically configured to:

determine the first dialog type of the first user statement from a plurality of dialog types by using a state determining network, where the plurality of dialog types include at least two of the chit-chat dialog, the task-oriented dialog, the question answering dialog, and the retrieval dialog.

In a possible implementation, the obtaining module is further configured to:

obtain a to-be-responded second user statement;

the state generation module is further configured to determine second state information of the second user statement based on the second user statement by using the state determining network, where the second state information includes a second dialog type of the second user statement, the second dialog type is a chit-chat dialog, a task-oriented dialog, a question answering dialog, or a retrieval dialog, and the second dialog type is different from the first dialog type; and

the response generation module is further configured to input the second user statement and the second dialog type into the response generation network, to obtain a response corresponding to the second user statement.

In a possible implementation, the state determining network and the response generation network each are a GPT model, a DialoGPT model, a BART model, or a T5 model.

In a possible implementation, the response generation module is specifically configured to:

obtain, from the first user statement or a database based on the first user statement, a keyword or a key sentence for constructing the response; and

input the first user statement, the first dialog type, and the keyword or the key sentence into the response generation network, to obtain the response corresponding to the first user statement.

According to a fourth aspect, this application provides a response determining apparatus. The apparatus includes:

an obtaining module, configured to obtain a first user statement, a first dialog type of the first user statement, and a first response corresponding to the first user statement, where the first dialog type is a real type of the first user statement, and the first dialog type is a chit-chat dialog, a task-oriented dialog, a question answering dialog, or a retrieval dialog;

a state generation module, configured to determine first state information of the first user statement based on the first user statement by using a state determining network, where the first state information includes a second dialog type of the first user statement;

a response generation module, configured to input the first user statement and the first dialog type into a response generation network, to obtain a second response corresponding to the first user statement; and

a model update module, configured to: update the state determining network based on a difference between the first dialog type and the second dialog type; and

update the response generation network based on a difference between the first response and the second response.

This application provides the response determining apparatus. The apparatus includes: the obtaining module, configured to obtain the first user statement, the first dialog type of the first user statement, and the first response corresponding to the first user statement, where the first dialog type is the real type of the first user statement, and the first dialog type is the chit-chat dialog, the task-oriented dialog, the question answering dialog, or the retrieval dialog; the state generation module, configured to determine the first state information of the first user statement based on the first user statement by using the state determining network, where the first state information includes the second dialog type of the first user statement; the response generation module, configured to input the first user statement and the first dialog type into the response generation network, to obtain the second response corresponding to the first user statement; and the model update module, configured to: update the state determining network based on the difference between the first dialog type and the second dialog type; and update the response generation network based on the difference between the first response and the second response. In this application, a dialog type of a user dialog is identified by using the state determining network, and responses corresponding to different dialog types are generated by reusing the dialog generation network, which is equivalent to processing user statements of different dialog types by using a same model. During model training, modes of a plurality of dialog types can be unified, so that the plurality of dialog types can be trained at the same time, and a trained dialog system has a capability of a plurality of dialog types, thereby reducing model complexity and a model size of the dialog system.

In a possible implementation, the state generation module is specifically configured to:

determine the second dialog type of the first user statement from a plurality of dialog types by using the state determining network, where the plurality of dialog types include at least two of the chit-chat dialog, the task-oriented dialog, the question answering dialog, and the retrieval dialog.

In a possible implementation, the obtaining module is further configured to:

obtain a second user statement, a third dialog type of the second user statement, and a third response corresponding to the second user statement, where the third dialog type is a real type of the second user statement;

the state generation module is further configured to determine second state information of the second user statement based on the second user statement by using the state determining network, where the second state information includes a fourth dialog type of the second user statement, and the fourth dialog type is different from the third dialog type;

the response generation module is further configured to input the second user statement and the third dialog type into the response generation network, to obtain a fourth response corresponding to the second user statement; and

the model update module is further configured to: update the state determining network based on a difference between the fourth dialog type and the third dialog type; and

update the response generation network based on a difference between the fourth response and the third response.

In a possible implementation, the state determining network and the response generation network each are a GPT model, a DialoGPT model, a BART model, or a T5 model.

In a possible implementation, the response generation module is specifically configured to:

obtain, from the first user statement or a database based on the first user statement, a keyword or a key sentence for constructing the response; and

input the first user statement, the first dialog type, and the keyword or the key sentence into the response generation network, to obtain the second response corresponding to the first user statement.

According to a fifth aspect, an embodiment of this application provides a response determining apparatus. The apparatus may include a memory, a processor, and a bus system. The memory is configured to store a program, and the processor is configured to execute the program in the memory, to perform any optional method according to the first aspect.

According to a sixth aspect, an embodiment of this application provides a response determining apparatus. The apparatus may include a memory, a processor, and a bus system. The memory is configured to store a program, and the processor is configured to execute the program in the memory, to perform any optional method according to the second aspect.

According to a seventh aspect, an embodiment of this application provides a computer-readable storage medium. The computer-readable storage medium stores a computer program, and when the computer program is run on a computer, the computer is enabled to perform any optional method according to the first aspect, or any optional method according to the second aspect.

According to an eighth aspect, an embodiment of this application provides a computer program product, including code. When being executed, the computer program product is configured to implement any optional method according to the first aspect and any optional method according to the second aspect.

According to a ninth aspect, this application provides a chip system. The chip system includes a processor, configured to support an execution device or a training device in implementing functions in the foregoing aspects, for example, sending or processing data or information in the foregoing method. In a possible design, the chip system further includes a memory. The memory is configured to store program instructions and data that are necessary for the execution device or the training device. The chip system may include a chip, or may include a chip and another discrete component.

Embodiments of this application provide the response determining method. The method includes: obtaining the to-be-responded first user statement; determining the first state information of the first user statement based on the first user statement by using the state determining network, where the first state information includes the first dialog type of the first user statement, and the first dialog type is the chit-chat dialog, the task-oriented dialog, the question answering dialog, or the retrieval dialog; and inputting the first user statement and the first dialog type into the response generation network, to obtain the response corresponding to the first user statement. The dialog type of the user dialog is identified by using the state determining network, and the responses corresponding to different dialog types are generated by reusing the dialog generation network, which is equivalent to processing user statements of different dialog types by using the same model. During model training, modes of the plurality of dialog types can be unified, so that the plurality of dialog types can be trained at the same time, and the trained dialog system has the capability of a plurality of dialog types, thereby reducing model complexity and the model size of the dialog system.

**BRIEF DESCRIPTION OF DRAWINGS**

FIG. 1 is a schematic diagram of a structure of an artificial intelligence main framework;
FIG. 2 is a schematic diagram of a system architecture according to an embodiment of this application;
FIG. 3 is a schematic diagram of an embodiment of a response determining method according to an embodiment of this application;
FIG. 4 is a schematic diagram of an interface of a task-oriented dialog;
FIG. 5 is a schematic diagram of a model according to an embodiment of this application;
FIG. 6 is a schematic diagram of a model according to an embodiment of this application;
FIG. 7 is a schematic diagram of a response determining method according to an embodiment of this application;
FIG. 8 is a schematic diagram of a response determining apparatus according to an embodiment of this application;
FIG. 9 is a schematic diagram of a response determining apparatus according to an embodiment of this application;
FIG. 10 is a schematic diagram of a structure of an execution device according to an embodiment of this application;
FIG. 11 is a schematic diagram of a structure of a training device according to an embodiment of this application; and
FIG. 12 is a schematic diagram of a structure of a chip according to an embodiment of this application.

**DESCRIPTION OF EMBODIMENTS**

The following describes embodiments of the present invention with reference to accompanying drawings in embodiments of the present invention. Terms used in implementations of the present invention are merely intended to explain specific embodiments of the present invention, but not intended to limit the present invention.

The following describes embodiments of this application with reference to the accompanying drawings. A person of ordinary skill in the art may learn that, with development of technologies and emergence of a new scenario, technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the terms used in such a way are interchangeable in appropriate circumstances, which is merely a discrimination manner that is used when objects having a same attribute are described in embodiments of this application. In addition, the terms "include", "have" and any other variants mean to cover the non-exclusive inclusion, so that a process, method, system, product, or device that includes a series of units is not necessarily limited to those units, but may include other units not expressly listed or inherent to such a process, method, system, product, or device.

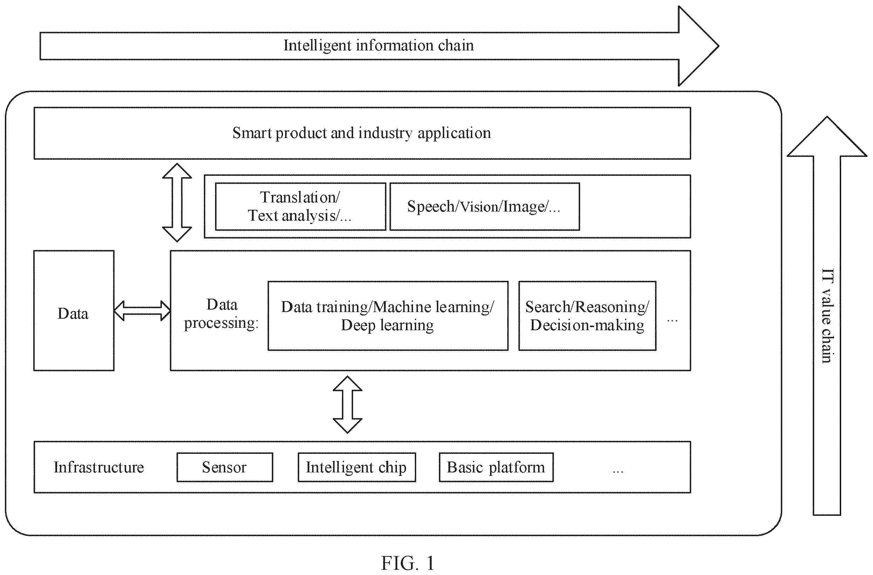

An overall working procedure of an artificial intelligence system is first described with reference to FIG. 1. FIG. 1 is a schematic diagram of a structure of an artificial intelligence main framework. The following describes the artificial intelligence main framework from two dimensions: an "intelligent information chain" (a horizontal axis) and an "IT value chain" (a vertical axis). The "intelligent information chain" indicates a process from data obtaining to data processing. For example, the "intelligent information chain" may be a general process of intelligent information perception, intelligent information representation and formation, intelligent reasoning, intelligent decision-making, and intelligent execution and output. In this process, data undergoes a refining process of "data - information - knowledge - intelligence". The "IT value chain" is an industrial ecological process from underlying infrastructure of artificial intelligence to information (providing and processing technical implementations) to a system, and indicates value brought by artificial intelligence to the information technology industry.

(1) Infrastructure

Infrastructure provides computing capability support for the artificial intelligence system, to communicate with the outside world and implement support by using basic platforms. The infrastructure communicates with the outside by using sensors. A computing capability is provided by intelligent chips (hardware acceleration chips such as a CPU, an NPU, a GPU, an ASIC, and an FPGA). The basic platforms include related platforms, for example, a distributed computing framework and network, for assurance and support. The basic platforms may include a cloud storage and computing network, an interconnection network, and the like. For example, the sensor communicates with the outside to obtain data, and the data is provided for an intelligent chip in a distributed computing system provided by the basic platform to perform computation.

(2) Data

Data at an upper layer of the infrastructure indicates a data source in the artificial intelligence field. The data relates to graphics, images, speech, and text, and further relates to internet of things data of conventional devices, and includes service data of a conventional system and perception data such as force, displacement, a liquid level, temperature, and humidity.

(3) Data processing

Data processing usually includes manners, such as data training, machine learning, deep learning, searching, reasoning, and decision-making.

The machine learning and the deep learning may be used for performing symbolic and formal intelligent information modeling, extraction, preprocessing, training, and the like on data.

The reasoning is a process of performing machine thinking and solving problems by simulating an intelligent reasoning mode of humans in a computer or intelligent system by using formal information and according to a reasoning control policy. Typical functions are searching and matching.

The decision-making is a process of performing decision-making after performing reasoning on intelligent information, and usually provides classification, sorting, prediction, and other functions.

(4) General capabilities

After data undergoes the foregoing data processing, some general capabilities may be formed based on a data processing result. For example, the general capabilities may be an algorithm or a general system, for example, translation, text analysis, computer vision processing, speech recognition, and image recognition.

(5) Intelligent products and industry application

The intelligent product and industry application are a product and an application of the artificial intelligence system in various fields, and are package of an overall solution of artificial intelligence, so that decision-making for intelligent information is productized and an application is implemented. Application fields mainly include a smart terminal, smart transportation, smart health care, autonomous driving, a smart city, and the like.

The following describes an example of an application scenario of this application.

A method and an apparatus provided in embodiments of this application are applied to a man-machine dialog scenario in a natural language processing (natural language processing, NLP) technology. Specifically, embodiments of this application are applied to a scenario of constructing a dialog robot and providing a semantic understanding and a dialog service for an end user. The dialog robot is, for example, a child accompanying education robot, an after-sales automatic answer application, a pre-sales consultation robot, or an intelligent voice assistant on a terminal.

The following describes an application architecture in embodiments of this application.

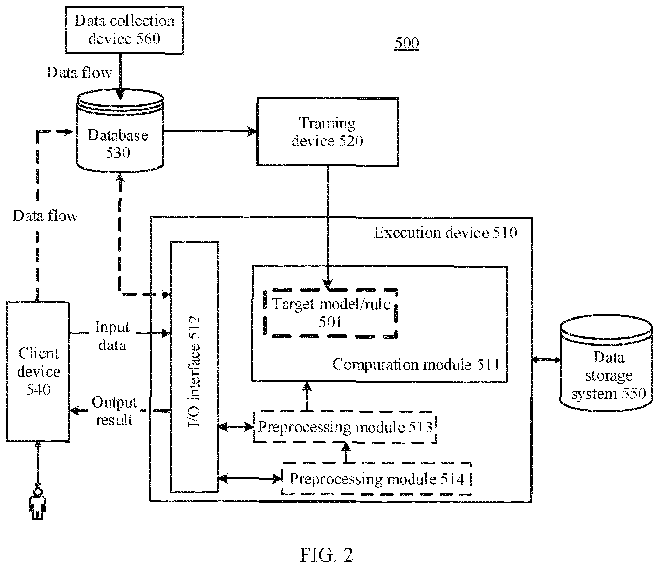

The following describes in detail the system architecture provided in embodiments of this application with reference to FIG. 2. FIG. 2 is a schematic diagram of a system architecture according to an embodiment of this application. As shown in FIG. 2, the system architecture 500 includes an execution device 510, a training device 520, a database 530, a client device 540, a data storage system 550, and a data collection system 560.

The execution device 510 includes a computation module 511, an I/O interface 512, a preprocessing module 513, and a preprocessing module 514. The computation module 511 may include a state determining network/rule 501, and the preprocessing module 513 and the preprocessing module 514 are optional.

The data collection device 560 is configured to collect a training sample. The training sample may be text data or the like. In this embodiment of this application, the training sample is data for training the state determining network and a response generation network. After collecting the training samples, the data collection device 560 stores the training samples in the database 530.

It should be understood that the database 530 may further maintain a pre-trained model such as a state determining network and a response generation network, or a model obtained after fine-tune (fine-tune) is performed on the pre-trained model for at least one time.

The training device 520 may train the state determining network and the response generation network by using the training samples maintained in the database 530, to obtain the state determining network/rule 501. In this embodiment of this application, the state determining network/rule 501 may be a trained state determining network and response generation network.

It should be noted that, during actual application, the training samples maintained in the database 530 are not necessarily collected by the data collection device 560, but may be received from another device. It should further be noted that the training device 520 may not necessarily train the state determining network/rule 501 totally based on the training samples maintained in the database 530, or may obtain a training sample from a cloud or another place for model training. The foregoing descriptions should not be construed as a limitation on embodiments of this application.

Specifically, the training sample may be private data from the client device 540, and the training device 520 may use the private data from the client device 540 as the training sample to perform model fine-tune on the state determining network and the response generation network.

In this embodiment of this application, the training device 520 may train the state determining network and the response generation network in the model training method in embodiments of this application, to obtain the trained state determining network and response generation network.

The state determining network/rule 501 obtained through training by the training device 520 is applied to different systems or devices, for example, the execution device 510 shown in FIG. 2. The execution device 510 may be a terminal, for example, a mobile phone terminal, a tablet computer, a laptop computer, an augmented reality (augmented reality, AR)/virtual reality (virtual reality, VR) device, or a vehicle-mounted terminal; or may be a server, a cloud, or the like.

In FIG. 2, the input/output (input/output, I/O) interface 512 is configured in the execution device 510, and is configured to exchange data with an external device. A user may input data (for example, a first user statement and a second user statement in embodiments of this application) to the I/O interface 512 by using the client device 540.

The preprocessing module 513 and the preprocessing module 514 each are configured to perform preprocessing based on input data received by the I/O interface 512. It should be understood that there may be no preprocessing module 513 or preprocessing module 514, or there is only one preprocessing module. If the preprocessing module 513 and the preprocessing module 514 do not exist, the computation module 511 may be directly configured to process input data.

In a process in which the execution device 510 preprocesses the input data, the computation module 511 in the execution device 510 performs computing, or the like, the execution device 510 may invoke data, code, and the like in the data storage system 550 for corresponding processing, and may further store, in the data storage system 550, data, instructions, and the like that are obtained through the corresponding processing.

Finally, the I/O interface 512 presents a processing result (for example, a response) to the client device 540, so as to provide the processing result to a user.

In a case shown in FIG. 2, the user may manually specify the input data, and the "manually specifying the input data" may be operated on an interface provided by the I/O interface 512. In another case, the client device 540 may automatically send the input data to the I/O interface 512. If that the client device 540 automatically sends the input data needs to obtain authorization from the user, the user may set corresponding permission on the client device 540. The user can view, on the client device 540, the result output by the execution device 510. The result may be specifically presented as displaying, a sound, or an action. The client device 540 may also serve as a data collector to collect, as new sample data, the input data input into the I/O interface 512 and the output result output from the I/O interface 512 that are shown in the figure, and store the new sample data into the database 530. Certainly, the client device 540 may alternatively not perform collection, but the I/O interface 512 directly stores, as new sample data into the database 530, the input data input into the I/O interface 512 and the output result output from the I/O interface 512 that are shown in the figure.

It should be noted that FIG. 2 is merely the schematic diagram of the system architecture according to this embodiment of this application. A location relationship between the devices, the components, the modules, and the like shown in the figure does not constitute any limitation. For example, in FIG. 2, the data storage system 550 is an external memory relative to the execution device 510, but in another case, the data storage system 550 may alternatively be disposed in the execution device 510. It should be understood that the execution device 510 may be deployed in the client device 540.

In this embodiment of this application, the training device 520 may obtain code stored in a memory (not shown in FIG. 2, and the memory may be integrated into the training device 520 or may be separately deployed from the training device 520), to implement the response determining method in embodiments of this application.

In this embodiment of this application, the training device 520 may include hardware circuits (for example, an application-specific integrated circuit (application-specific integrated circuit, ASIC), a field-programmable gate array (field-programmable gate array, FPGA), a general purpose processor, a digital signal processor (digital signal processing, DSP), a microprocessor, a microcontroller, and the like), or a combination of these hardware circuits. For example, the training device 520 may be a hardware system having an instruction execution function, for example, a CPU or a DSP, or a hardware system having no instruction execution function, for example, an ASIC or an FPGA, or a combination of the hardware system having no instruction execution function and the hardware system having the instruction execution function.

Specifically, the training device 520 may be the hardware system having the instruction execution function. The response determining method provided in embodiments of this application may be software code stored in the memory. The training device 520 may obtain the software code from the memory, and execute the obtained software code to implement the response determining method provided in embodiments of this application.

It should be understood that the training device 520 may be the combination of the hardware system having no instruction execution function and the hardware system having the instruction execution function. Some steps of the model training method provided in embodiments of this application may alternatively be implemented by the hardware system, in the training device 520, having no instruction execution function. This is not limited herein.

It should be understood that the execution device may be a server on a cloud side or an electronic device on a terminal side.

Embodiments of this application relate to massive application of a neural network. Therefore, for ease of understanding, the following first describes terms and concepts related to the neural network in embodiments of this application.

(1) Neural network

The neural network may include a neuron. The neuron may be an operation unit that uses xs (namely, input data) and an intercept of 1 as input. Output of the operation unit may be as follows:

$$h_{W,b}(x) = f(W^T x) = f\left(\sum\nolimits_{s=1}^{n} W_s x_s + b\right)$$

s=1, 2, ..., or n, where n is a natural number greater than 1; Ws is a weight of xs; b is a bias of the neuron; and f is an activation function (activation function) of the neuron, and is used for introducing a non-linear characteristic into the neural network, to convert an input signal of the neuron into an output signal. The output signal of the activation function may be used as input of a next convolutional layer. The activation function may be a sigmoid function. The neural network is a network constituted by linking a plurality of single neurons together. To be specific, output of one neuron may be input of another neuron. Input of each neuron may be connected to a local receptive field of a previous layer to extract a feature of the local receptive field. The local receptive field may be a region including several neurons.

(2) Deep neural network

The deep neural network (Deep Neural Network, DNN), also referred to as a multilayer neural network, may be understood as a neural network having many hidden layers. The "many" herein does not have a special measurement standard. The DNN is divided based on locations of different layers, and a neural network in the DNN may be divided into three types: an input layer, a hidden layer, and an output layer. Generally, a first layer is the input layer, a last layer is the output layer, and a middle layer is the hidden layer. Layers are fully connected. To be specific, any neuron at an

$i^{th}$ layer is necessarily connected to any neuron at an $(i+1)^{th}$ layer. Although the DNN seems complex, it is not complex in terms of work at each layer. Simply, it is the following linear relationship expression: $\vec{y} = \alpha(W\vec{x} + \vec{b})$. $\vec{x}$ is an input vector, $\vec{y}$ is an output vector, $\vec{b}$ is an offset vector, W is a weight matrix (also referred to as a coefficient), and $\alpha()$ is an activation function. At each layer, the output vector $\vec{y}$ is obtained by performing such a simple operation on the input vector X. Because the DNN has the plurality of layers, there are also a plurality of coefficients W and bias vectors $\vec{b}$. Definitions of these parameters in the DNN are as follows: The coefficient W is used as an example. It is assumed that in a DNN having three layers, a linear coefficient from a fourth neuron at a second layer to a second neuron at a third layer is defined as $W_{24}^{3}$. The superscript 3 represents a layer at which the coefficient W is located, and the subscript corresponds to an output third-layer index 2 and an input second-layer index 4. In conclusion, a coefficient from a $k^{th}$ neuron at an $(L-1)^{th}$ layer to a $j^{th}$ neuron at an $L^{th}$ layer is defined as $W_{jk}^{L}$. It should be noted that there is no parameter W at the input layer. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

(3) Loss function

In a process of training a deep neural network, because it is expected that output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before a first update, to be specific, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is close to the target value that is actually expected. Therefore, "How to obtain, through comparison, the difference between the predicted value and the target value" needs to be predefined. This is the loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

(4) Back propagation algorithm

An error back propagation (back propagation, BP) algorithm may be used to correct a value of a parameter in an initial model in a training process, so that an error loss of the model becomes smaller. Specifically, an input signal is transferred forward until an error loss occurs at output, and the parameter in the initial model is updated based on back propagation error loss information, to make the error loss converge. The back propagation algorithm is an error-loss-centered back propagation motion intended to obtain a parameter, such as a weight matrix, of an optimal model.

In the open field, ensemble learning is usually a learning method that integrates a plurality of functional modules or task types. In the research of a dialog system, different dialog types and different dialog fields can be integrated through ensemble learning. A transformer model is a common model architecture for modeling dialogs. The model includes a transformer encoder and decoder. The encoder module is configured to encode dialog context information, and the decoder module is generated based on a dialog context. The conventional technology 1 proposes that a plurality of decoder modules may be used to model dialog fields, and each decoder module corresponds to one dialog field. In a model training process, an encoder module corresponding to each dialog field learns through parameter sharing, and a data set corresponding to each dialog field is used to learn a decoder module corresponding to the field. In addition, in a training process, the system learns a recurrent neural network-based module to determine a domain to which a current dialog context belongs, and then performs weighted integration of a plurality of decoder parameters by using a determining probability distribution, to obtain a multi-domain dialog system.

The ensemble learning method has many disadvantages, such as a complex model, high deployment costs, and high update costs. In the conventional technology 1, each field corresponds to one system submodule, which greatly increases model complexity and training overheads. When a quantity of dialog domains increases, a larger submodule is required to carry functions. Consistency between a plurality of domains is not achieved.

With evolution of technologies, user requirements will always evolve towards one system to resolve all problems.

It is a development trend to use a dialog pre-training technology to enable a single model to support various dialog types and switch between tasks. Therefore, the solutions of the present invention provide a unified end-to-end dialog system framework, to unify dialog systems of different types into a same dialog mode. This implements unified training of different dialog types, so that a model has a capability of completing different types of dialogs.

The response determining method provided in embodiments of this application is described first by using a model inference phase as an example.

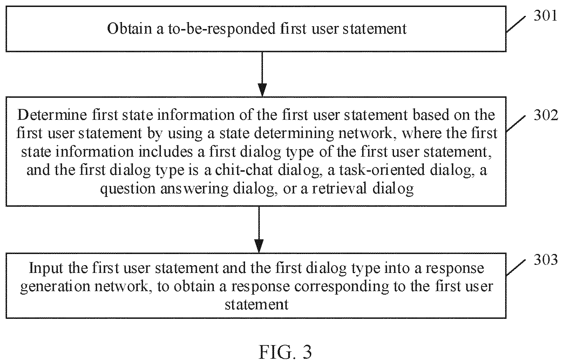

FIG. 3 is a schematic diagram of an embodiment of a response determining method according to an embodiment of this application. As shown in FIG. 3, the response determining method provided in this embodiment of this application includes the following steps.

301: Obtain a to-be-responded first user statement.

In a possible implementation, the first user statement may be a text, such as a question or a request, input by a user to a question answering device. For example, the user may input a target question into the question answering device in a text form. In this case, the question answering device may directly obtain the first user statement in the text form. The user may further input a target question into the question answering device in a speech form. In this case, the question answering device may convert the received speech information into text information, to obtain the first user statement in the text form. The user may further input a target question into the question answering device by using a body language. In this case, the question answering device captures and analyzes body movement of the user, and identifies the first user statement in the text form.

302: Determine first state information of the first user statement based on the first user statement by using a state determining network, where the first state information includes a first dialog type of the first user statement, and the first dialog type is a chit-chat dialog, a task-oriented dialog, a question answering dialog, or a retrieval dialog.

In a possible implementation, after the first user statement is obtained, the first state information of the first user statement needs to be determined, where the first state information may include the first dialog type.

In a possible implementation, the first state information of the first user statement may be determined by using the state determining network.

In a possible implementation, the state determining network may be a generative pre-trained transformer (generative pre-trained transformer, GPT) model, a dialogue generative pre-trained transformer (dialogue generative pre-trained transformer, DialoGPT) model, a bidirectional and auto-regressive transformer (bidirectional and auto-regressive transformer, BART) model, or a T5 (transfer text-to-text transformer) model.

In a possible implementation, the first dialog type of the first user statement can be determined from a plurality of dialog types by using the state determining network, where the plurality of dialog types includes at least two of the chit-chat dialog, the task-oriented dialog, the question answering dialog, and the retrieval dialog.

For example, the plurality of dialog types include the chit-chat dialog and the task-oriented dialog.

For example, the plurality of dialog types include the chit-chat dialog and the question answering dialog.

For example, the plurality of dialog types include the chit-chat dialog and the retrieval dialog.

For example, the plurality of dialog types include the task-oriented dialog and the question answering dialog.

For example, the plurality of dialog types include the task-oriented dialog and the retrieval dialog.

For example, the plurality of dialog types include the question answering dialog and the retrieval dialog.

For example, the plurality of dialog types include the chit-chat dialog, the task-oriented dialog, and the question answering dialog.

For example, the plurality of dialog types include the chit-chat dialog, the task-oriented dialog, and the retrieval dialog.

For example, the plurality of dialog types include the task-oriented dialog, the question answering dialog, and the retrieval dialog.

For example, the plurality of dialog types include the chit-chat dialog, the task-oriented dialog, the question answering dialog, and the retrieval dialog.

The state determining network may be trained and has a capability of determining a corresponding dialog type based on a user statement.

It should be understood that, when the dialog type is determined, input of the state determining network may be the first user statement (optionally, may further include another historical statement of the user). This is not limited herein.

It should be understood that the dialog type may also be referred to as a dialog belief state (belief state).

The task-oriented dialog is described below.

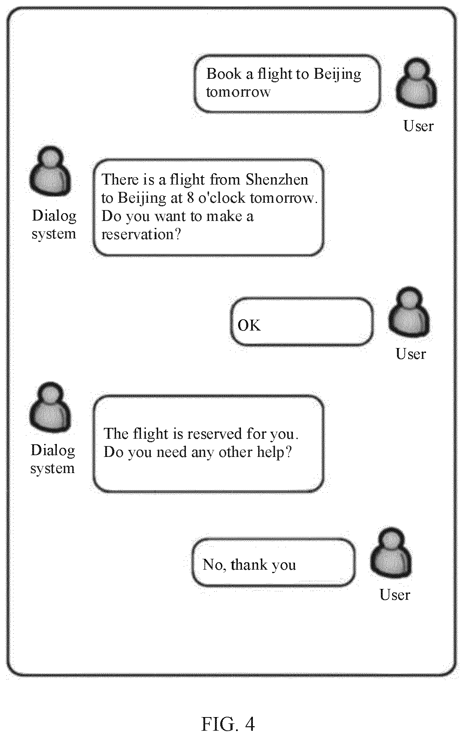

FIG. 4 is a schematic diagram of an application scenario of a task-oriented dialog according to this application. In this application scenario, a user performs the task-oriented dialog with a dialog system. As shown in FIG. 4, a right side in FIG. 4 corresponds to user statements input by the user, and a left side in FIG. 4 corresponds to responses output by the dialog system based on the user statements. First, the user inputs a user statement "Book a flight to Beijing tomorrow". Then, the dialog system outputs a response "There is a flight from Shenzhen to Beijing at 8 o'clock tomorrow.

Do you want to make a reservation?". Then, the user inputs a user statement "OK". The dialog system outputs a response "The flight is reserved for you. Do you need any other help?". The user inputs a user statement "No, thank you". It should be understood that the application scenario shown in FIG. 4 is merely an example of a task-oriented dialog. In actual application, the task-oriented dialog may alternatively be a dialog about making a call, a dialog about querying a geographical location, a dialog about ordering a take-out, a dialog about querying weather, a dialog about booking a hotel, or the like. This is not specifically limited herein.

Due to complexity of the task-oriented dialog, the user needs to describe a requirement in a plurality of rounds. The dialog system needs to make a best decision under a restriction condition of each round and record a current state (context).

When the state determining network identifies that the dialog type of the first user statement is the task-oriented dialog, the task-oriented dialog may be represented by using intentional behavior (or user behavior for short) of the user. Specifically, in the task-oriented dialog, the user statement input by the user usually includes user behavior. The user behavior is behavior that the user makes a request for the dialog system. The user statement "Book a flight to Beijing tomorrow" is used as an example. The user statement is used to make a flight booking request for the dialog system. Therefore, the user statement includes the user behavior "Booking a flight". It should be understood that the foregoing example of the user behavior is merely used as an example. In another embodiment, the user behavior may alternatively be "making a call", "querying a geographical location", "ordering a take-out", "querying weather", "booking a hotel", or the like. This is not specifically limited herein.

For example, if the first user statement is "I am looking for a cheap hotel", the first dialog type may be a hotel.

The user behavior may be obtained through identification after the dialog system inputs the user statement to the state determining network. In a specific embodiment, the state determining network may classify types based on user behavior supported by the dialog system. For example, if the user behavior supported by the dialog system includes "booking a flight", "making a call", "ordering a take-out", "querying weather", and "booking a hotel", the types of the state determining network include "booking a flight", "making a call", "ordering a take-out", "querying weather", and "booking a hotel". The state determining network may determine, based on the user statement "Book a flight to Beijing" input by the user, that the user statement should be classified into a "booking a flight" type, so as to identify that user behavior included in the user statement is "booking a flight".

A question answering system (question answering system, QA) has been widely used. The question answering system is an advanced form of information retrieval system, and can answer questions raised by users in natural language with accurate and concise natural language. The question answering system may also be referred to as a human-computer dialog system or the like. Currently, intelligent customer service systems in many fields adopt the question answering system. FIG. 1 is a schematic diagram of a possible application scenario according to an embodiment of this application. As shown in FIG. 1, the application scenario includes a question answering device and a user. For example, the user may raise a question to the question answering device, and the question answering device returns an appropriate answer to the user based on the question of the user. For example, the user raises a question "Where is the capital of China?" to the question answering device. The question answering device returns an answer "Beijing" to the user.

The question answering dialog is described below.

The question answering here refers to one question and one answer, that is, the accurate answer is directly provided based on the question of the user, for example, "What's the temperature of Beijing today". The question answering is more similar to information retrieval, although it may also relate to contextual processing, for example, "What's the temperature tomorrow".

The first user statement may be a question input by the user, and the dialog system needs to determine, from a knowledge base (or referred to as a database), the answer corresponding to the first user statement. The knowledge base is used to provide knowledge for answering the question of the user. A semantic matching model may be set in a processing unit, and is used to retrieve a most appropriate answer in the knowledge base based on the question of the user. It can be understood that richer knowledge in the knowledge base indicates that the question answering device can answer more questions. In a possible implementation, the knowledge in the knowledge base is stored in a form of a "question-answering pair". The "question-answering pair" may also be referred to as "question and answering (question and answering, QA) pair" for short. Q represents a known question (or referred to as a standard question), and A represents an answer corresponding to Q. After receiving the question of the user, the question answering device searches the knowledge base for the answer. In essence, the question answering device matches the question of the user with the known question in the knowledge base, and returns the answer corresponding to the most matched known question.

The chit-chat dialog is described below.

In a possible implementation, the chit-chat dialog may include greetings and small talks, and is characterized by no specific purpose and does not necessarily answer a question of a user. Chat in the human-computer dialog system functions as emotional companion.

In a possible implementation, the first state information may further include slot information, and the slot information may be a keyword in the first user statement. The task-oriented dialog is used as an example. The dialog system can input the user statement into the state determining network to identify the slot information. The state determining network can extract key information provided in the user dialog. For example, slot types for booking a flight include "departure place" and "destination", and a slot identification model needs to extract information about "departure place" and "destination". The state determining network identifies results of "departure place: Beijing" and "destination: Shanghai" based on the user statement "I want to book a flight from Beijing to Shanghai" input by the user, so as to provide the slot information for the dialog system.

For example, the first user statement is "Does money buy happiness?", and the state determining network may identify that a corresponding first dialog type is "chit". The "chit" may indicate that the first user statement is the chit-chat dialog, and the first state information may further include slot information "money happiness".

For example, the first user statement is "I am looking for a cheap hotel", and the state determining network may identify that a corresponding first dialog type is "hotel". The "hotel" may indicate that the first user statement is the task-oriented dialog, and the first state information may further include slot information "price cheap".

For example, the first user statement is "How high is Mt. Everest?", the first user statement is a chit-chat dialog, and the state determining network may identify that a corresponding first dialog type is "qa". The "qa" may indicate that the first user statement is a question answering dialog, and the first state information may further include slot information "Mt. Everest high".

For example, the first user statement is "Which is the best brand for basketball?", and the state determining network may identify that a corresponding first dialog type is "faq". The "faq" may indicate that the first user statement is the retrieval dialog, and the first state information may further include slot information "brand basketball".

303: Input the first user statement and the first dialog type into a response generation network, to obtain a response corresponding to the first user statement.

In a possible implementation, the response generation network may be a GPT model, a DialoGPT model, a BART model, or a T5 model.

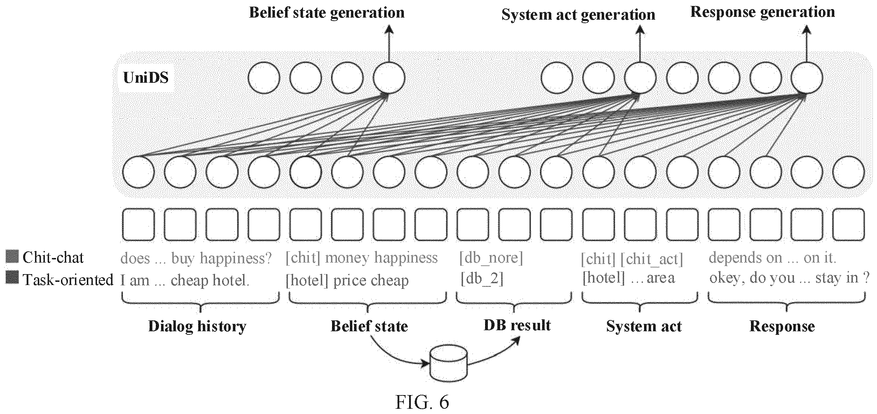

Optionally, the state determining network and the response generation network in this embodiment of this application may be two parts of a same network, or may be different networks. FIG. 6 is a schematic diagram when the state determining network and the response generation network may be two parts of a same network.

In a possible implementation, the dialog system may obtain, from the first user statement or the database based on the first user statement, the keyword or a key sentence for constructing the response; and input the first user statement, the first dialog type, and the keyword or the key sentence into the response generation network, to obtain the response corresponding to the first user statement.

In this embodiment of this application, data or text content related to a dialog can be obtained from an external resource such as an external database/a knowledge base/a corpus based on the first user statement and the first dialog type, and is used as dialog information (namely, the keyword or key sentence) to join a dialog process.

In a possible implementation, the method further includes: inputting the first user statement and the first dialog type into a response generation network, to obtain a response corresponding to the first user statement; or inputting the first user statement, the first dialog type, and the keyword or the key sentence into the response generation network, to obtain the response corresponding to the first user statement.

It should be understood that the response generation network may further generate the response of the first user statement based on another user historical statement other than the first user statement. This is not limited herein.

In this embodiment of this application, responses corresponding to different dialog types can be generated by reusing the dialog generation network in this embodiment of this application. In a possible implementation, the method further includes: obtaining a to-be-responded second user statement, determining second state information of the second user statement based on the second user statement by using the state determining network, where the second state information includes a second dialog type of the second user statement, the second dialog type is a chit-chat dialog, a task-oriented dialog, a question answering dialog, or a retrieval dialog, and the second dialog type is different from the first dialog type; and inputting the second user statement and the second dialog type into the response generation network, to obtain a response corresponding to the second user statement.

In this embodiment of this application, a dialog type of a user dialog is identified by using the state determining network, and responses corresponding to different dialog types are generated by reusing the dialog generation network, which is equivalent to processing user statements of different dialog types by using a same model. During model training, modes of a plurality of dialog types can be unified, so that the plurality of dialog types can be trained at the same time, and a trained dialog system has a capability of a plurality of dialog types, thereby reducing model complexity and a model size of the dialog system.

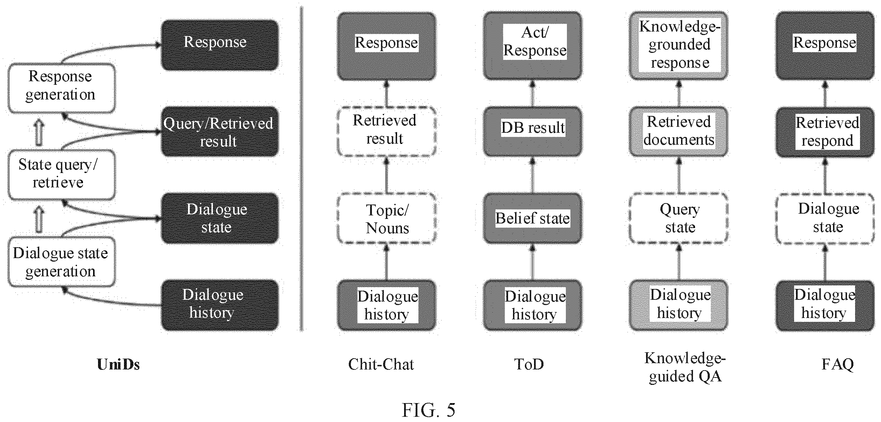

Refer to FIG. 5. In a conventional implementation, a chit-chat dialog model includes only the foregoing dialog generation network. The network provided in this application is equivalent to adding the "state determining network" and a "state retrieval module" to the chit-chat dialog model, where "dialog state generation" may capture a chat topic or key content of a current round, and the "state retrieval" may be used as an input interface of the related topic or dialog information. A question answering dialog model adds the "state determining network", to guide response content of the model, and increase relevance between a retrieval result and the response content. A retrieval dialog model adds the "state determining network", to increase context information of a current round of dialog.

Table 1 is a schematic diagram of comparison between dialogs of different dialog types in a dialog system provided in this application.

**Table 1**

| | Integrated dialog system | Chit-chat dialog | Task-oriented dialog | Question answering dialog | Retrieval dialog |
|---|---|---|---|---|---|
| Dialog state generation | Input: Dialog history Output: Dialog state | Generates a dialog topic or a keyword in the dialog history based on the dialog history as the dialog state. | Generates a belief state based on the dialog history. | Generates, based on the dialog history, information related to response content as the dialog state. | Generates a keyword in the dialog history based on the dialog history as the dialog state. |
| State query/ retrieve | Input: Dialog state Output: Query/ Retrieved result | Performs retrieval based on the dialog state to obtain dialog context information. | Queries a database based on the belief state to obtain a query result. | Performs retrieval based on the dialog state to obtain external knowledge information. | Performs retrieval based on the dialog state to obtain a related candidate response. |
| Response generation | Input: Query/ Retrieved result Output: Response | Generates a response based on previous generated content and the retrieved result. | Generates a system action based on previous generated content and the query result, and then generates a response. | Generates a response based on previous generated content and the retrieved result. | Generates a response based on previous generated content and the candidate |

Table 1 is a schematic diagram in which a dialog system processes dialogs of different dialog types in actual application.

**Table 2**

| | Integrated dialog system | Chit-chat dialog | Task-oriented dialog | Question answering dialog | Retrieval dialog |
|---|---|---|---|---|---|
| Dialog history | Segmented sentence | Does money buy happiness? | I am looking for a cheap hotel. | How high is Mt. Everest? | Which is the best brand for basketball? |
| Dialog state | [domain] slot value | [chit] money happiness | [hotel] price cheap | [qa] Mt. Everest high | [faq] brand basketball |
| Query/ Retriev ed result | Candidate entity number/topic/ keywords/seg mented sentence | money | [db_2] | Mount Everest is Earth's highest ... Nepali and Chinese authorities | Spalding |
| Response | [domain] slot value <r> segmented sentence | [chit] chit <r> depends on how much money you spend on it. | [hotel] request area <r> do you have a specific area you want to stay in? | [qa] elevation 8,848.86 m <r> Mount Everest elevation is 8,848.86 m. | [faq] faq <r> Spalding |

Beneficial effect of this application is verified below with reference to specific data sets. MultiWOZ 2.0 is used as a task-oriented dialog data set, and Reddit is used as a chit-chat dialog data set. Dialog performance of an integrated dialog model is compared with that of a conventional model based on the two types of dialog data, as shown in Table 3.

**Table 3**

| Model | Parameter | Task-oriented | | | | Chit-chat | | | |
|---|---|---|---|---|---|---|---|---|---|
| | | Inform | Success | BLEU | Combined | BLEU | Dist-1 | Dist-2 | AvgLen |
| UBAR-repro | 82M | 88.70 | 78.40 | 16.60 | 100.15 | | | | |
| UBAR-DialoGPT-12L | 117M | **89.40** | 75.10 | 16.93 | 99.18 | - | - | - | - |
| DialoGPT-12L | 117M | - | - | - | - | 0.27% | **6%** | **32%** | 14.00 |
| UniDS-12L | 117M | 87.10 | **77.00** | **18.01** | **100.06** | **0.35%** | 6% | 30% | 12.00 |
| UBAR-DialoGPT-24L | 345M | 89.40 | 75.50 | 16.86 | 99.31 | - | - | _ | - |
| DialoGPT-24L | 345M | | | | | 0.43% | 7% | **36%** | 12.28 |
| UniDS-24L | 345M | **90.30** | **80.50** | **18.72** | **104.12** | **0.45%** | 6% | 35% | 14.62 |

An experimental result shows that when similar parameters are used, performance of the integrated dialog system (UniDS) in a task-oriented dialog is significantly higher than a baseline, and performance in a chit-chat dialog is similar to the baseline model. This shows that the integrated dialog system has both task-oriented dialog and chit-chat dialog capabilities.

In this embodiment, a task type switching test is performed, and two data types are designed to perform the test.

(a) Randomly insert two rounds of chit-chat data before task-oriented data: Turn 1-chat, Turn 2-chat, Turn 3-task, Turn 4-task, ..., and Turn N-task

(b) Randomly insert two rounds of task-oriented data before chit-chat data: Turn 1-task, Turn 2-task, Turn 3-chat, Turn 4-chat, ..., and Turn N-chat

In addition, two model switching capability evaluation indicators are designed.

Switch-1: indicates a success rate that a model completes switching at a first round after a dialog type is switched.

Switch-2: indicates a success rate that a model completes switching at a second round after a dialog type is switched.

Table 4 and Table 5 list test results. In the two settings, the integrated dialog system can basically complete the dialog type switching in first two rounds after the data type is switched, which indicates that the integrated dialog system has the capability of switching between the task-oriented dialog and the chit-chat dialog.

**Table 4 Test result of task type (chat-to-task) switching in the integrated dialog system**

| UniDS | Tnf. | Succ. | BLEU | Comb. | Switch-1 | Switch-2 |
|---|---|---|---|---|---|---|
| 12L | 84.60 | 72.00 | 11.72 | 90.02 | 65.8 | 99.5 (+33.7) |
| 24L | 85.30 | 75.70 | 12.44 | 92.94 | 64.4 | 99.2 (+34.8) |

**Table 5 Test result of task type (task-to-chat) switching in the integrated dialog system**

| UniDS | BLEU | Dist-1 | Dist-2 | AvgLen | Switch-1 | Switch-2 |
|---|---|---|---|---|---|---|
| 12L | 0.22 | 4 | 19 | 14.15 | 31.8 | 98.9 (+67.1) |
| 24L | 0.34 | 6 | 31 | 16.18 | 37.0 | 96.6 (+59.6) |

In this embodiment, a task-oriented dialog robustness test is performed, and a noise environment in a real dialog scenario (for example, a dialog with a mobile phone assistant when a television is watched, or a chat with a passenger when a driver performs speech interaction) is simulated, that is, one or two rounds of chat dialogs are randomly inserted into a plurality of rounds of task-oriented dialogs. An experimental result in Table 6 shows that robustness of the integrated dialog system is better than that of a dialog model for task single training.

**Table 6 Robustness test for task-oriented dialogs in noisy environments**

| Model | Base | 1 turn | 2 turns |
|---|---|---|---|
| UBAR-DialoGPT- 12L | 99.18 | 93.76 (-5.42) | 88.14 (-11.04) |
| UniDS-12L | 100.06 | 96.13 (-3.93) | 91.42 (-8.64) |
| UBAR-DialoGPT-24L | 99.31 | 93.08 (-6.23) | 88.67 (-10.64) |
| UniDS-24L | 104.12 | 100.71 (-3.41) | 95.68 (-8.44) |

It can be learned from the foregoing that, compared with a plurality of single-type systems, the integrated dialog system provided in this embodiment of this application can significantly reduce an overall parameter quantity without performance deterioration or with performance improvement, and has a capability of switching between different dialog types, thereby greatly improving robustness of the task-oriented dialog.

This embodiment of this application provides the response determining method. The method includes: obtaining the to-be-responded first user statement; determining the first state information of the first user statement based on the first user statement by using the state determining network, where the first state information includes the first dialog type of the first user statement, and the first dialog type is the chit-chat dialog, the task-oriented dialog, the question answering dialog, or the retrieval dialog; and inputting the first user statement and the first dialog type into the response generation network, to obtain the response corresponding to the first user statement. The dialog type of the user dialog is identified by using the state determining network, and the responses corresponding to different dialog types are generated by reusing the dialog generation network, which is equivalent to processing user statements of different dialog types by using the same model. During model training, modes of the plurality of dialog types can be unified, so that the plurality of dialog types can be trained at the same time, and the trained dialog system has the capability of a plurality of dialog types, thereby reducing model complexity and the model size of the dialog system.

The response determining method provided in embodiments of this application is described first by using a model training phase as an example.

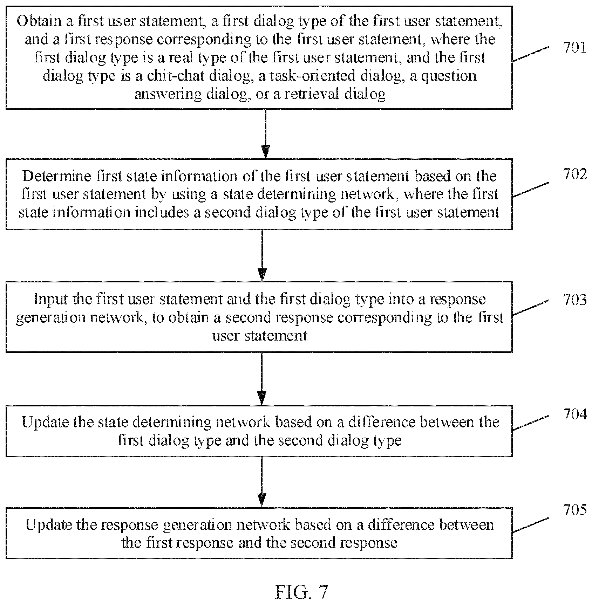

FIG. 7 is a schematic diagram of an embodiment of a response determining method according to an embodiment of this application. As shown in FIG. 7, the response determining method provided in this embodiment of this application includes the following steps.

701: Obtain a first user statement, a first dialog type of the first user statement, and a first response corresponding to the first user statement, where the first dialog type is a real type of the first user statement, and the first dialog type is a chit-chat dialog, a task-oriented dialog, a question answering dialog, or a retrieval dialog.

When training a state determining network and a response generation network, a training device may obtain a training sample. An iteration process is used as an example. The training sample may include the first user statement, the first dialog type of the first user statement, and the first response corresponding to the first user statement, where the first dialog type is the real type of the first user statement, and the first dialog type is the chit-chat dialog, the task-oriented dialog, the question answering dialog, or the retrieval dialog.

The state determining network and the response generation network are to-be-updated models. The state determining network and the response generation network each may be an initialized model in a model training start phase, or a pre-trained model. The model has some basic functions in a field to which the model belongs, or is a model that is obtained after the pre-trained model is fine-tuned and that has other functions than the basic functions.

In a possible implementation, the state determining network and the response generation network each are a GPT model, a DialoGPT model, a BART model, or a T5 model.

702: Determine first state information of the first user statement based on the first user statement by using the state determining network, where the first state information includes a second dialog type of the first user statement.

The second dialog type may be a result obtained by the state determining network during one feed-forward.

In a possible implementation, the second dialog type of the first user statement can be determined from a plurality of dialog types by using the state determining network, where the plurality of dialog types includes at least two of the chit-chat dialog, the task-oriented dialog, the question answering dialog, and the retrieval dialog.

703: Input the first user statement and the first dialog type into the response generation network, to obtain a second response corresponding to the first user statement.

The second response may be a result obtained by the response generation network during one feed-forward.

704: Update the state determining network based on a difference between the first dialog type and the second dialog type.

705: Update the response generation network based on a difference between the first response and the second response.

In a possible implementation, the method further includes: obtaining a second user statement, a third dialog type of the second user statement, and a third response corresponding to the second user statement, where the third dialog type is a real type of the second user statement; determining second state information of the second user statement based on the second user statement by using the state determining network, where the second state information includes a fourth dialog type of the second user statement, and the fourth dialog type is different from the third dialog type; inputting the second user statement and the third dialog type into the response generation network, to obtain a fourth response corresponding to the second user statement; updating the state determining network based on a difference between the fourth dialog type and the third dialog type; and updating the response generation network based on a difference between the fourth response and the third response.

In a possible implementation, the method further includes: obtaining, from the first user statement or a database based on the first user statement, a keyword or a key sentence for constructing the response; and inputting the first user statement, the first dialog type, and the keyword or the key sentence into the response generation network, to obtain the second response corresponding to the first user statement.

This embodiment of this application provides the response determining method. The method includes: obtaining the first user statement, the first dialog type of the first user statement, and the first response corresponding to the first user statement, where the first dialog type is the real type of the first user statement, and the first dialog type is the chit-chat dialog, the task-oriented dialog, the question answering dialog, or the retrieval dialog; determining the first state information of the first user statement based on the first user statement by using the state determining network, where the first state information includes the second dialog type of the first user statement; inputting the first user statement and the first dialog type into the response generation network, to obtain the second response corresponding to the first user statement; updating the state determining network based on the difference between the first dialog type and the second dialog type; and updating the response generation network based on the difference between the first response and the second response. A dialog type of a user dialog is identified by using the state determining network, and responses corresponding to different dialog types are generated by reusing the dialog generation network, which is equivalent to processing user statements of different dialog types by using the same model. During model training, modes of the plurality of dialog types can be unified, so that the plurality of dialog types can be trained at the same time, and a trained dialog system has a capability of a plurality of dialog types, thereby reducing model complexity and a model size of the dialog system.

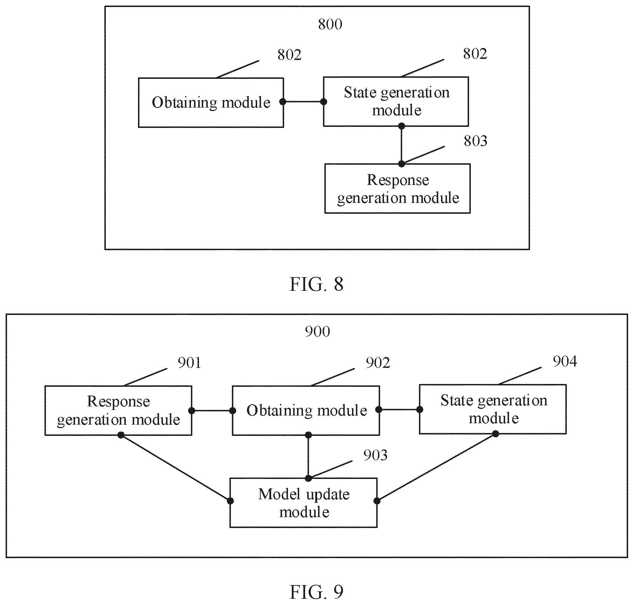

FIG. 8 is a schematic diagram of a response determining apparatus according to an embodiment of this application. As shown in FIG. 8, the apparatus 800 includes:

an obtaining module 801, configured to obtain a to-be-responded first user statement.

For a specific description of the obtaining module 801, refer to the description of step 301 in the foregoing embodiment. Details are not described herein again.

The apparatus further includes a state generation module 802, configured to determine first state information of the first user statement based on the first user statement by using a state determining network, where the first state information includes a first dialog type of the first user statement, and the first dialog type is a chit-chat dialog, a task-oriented dialog, a question answering dialog, or a retrieval dialog.

For a specific description of the state generation module 802, refer to the description of step 302 in the foregoing embodiment. Details are not described herein again.

The apparatus further includes a response generation module 803, configured to input the first user statement and the first dialog type into a response generation network, to obtain a response corresponding to the first user statement.

For a specific description of the response generation module 803, refer to the description of step 303 in the foregoing embodiment. Details are not described herein again.

In a possible implementation, the state generation module is specifically configured to:

determine the first dialog type of the first user statement from a plurality of dialog types by using a state determining network, where the plurality of dialog types include at least two of the chit-chat dialog, the task-oriented dialog, the question answering dialog, and the retrieval dialog.

In a possible implementation, the obtaining module is further configured to:

obtain a to-be-responded second user statement;
the state generation module is further configured to determine second state information of the second user statement based on the second user statement by using the state determining network, where the second state information includes a second dialog type of the second user statement, the second dialog type is a chit-chat dialog, a task-oriented dialog, a question answering dialog, or a retrieval dialog, and the second dialog type is different from the first dialog type; and
the response generation module is further configured to input the second user statement and the second dialog type into the response generation network, to obtain a response corresponding to the second user statement.

In a possible implementation, the state determining network and the response generation network each are a GPT model, a DialoGPT model, a BART model, or a T5 model.

In a possible implementation, the response generation module is specifically configured to:

obtain, from the first user statement or a database based on the first user statement, a keyword or a key sentence for constructing the response; and

input the first user statement, the first dialog type, and the keyword or the key sentence into the response generation network, to obtain the response corresponding to the first user statement.

This application provides the response determining apparatus. The apparatus includes: the obtaining module, configured to obtain the to-be-responded first user statement; the state generation module, configured to determine the first state information of the first user statement based on the first user statement by using the state determining network, where the first state information includes the first dialog type of the first user statement, and the first dialog type is the chit-chat dialog, the task-oriented dialog, the question answering dialog, or the retrieval dialog; and the response generation module, configured to input the first user statement and the first dialog type into the response generation network, to obtain the response corresponding to the first user statement. A dialog type of a user dialog is identified by using the state determining network, and responses corresponding to different dialog types are generated by reusing the dialog generation network, which is equivalent to processing user statements of different dialog types by using the same model. During model training, modes of the plurality of dialog types can be unified, so that the plurality of dialog types can be trained at the same time, and a trained dialog system has a capability of a plurality of dialog types, thereby reducing model complexity and a model size of the dialog system.

FIG. 9 is a schematic diagram of a response determining apparatus according to an embodiment of this application. As shown in FIG. 9, the apparatus 900 includes:

an obtaining module 902, configured to obtain a first user statement, a first dialog type of the first user statement, and a first response corresponding to the first user statement, where the first dialog type is a real type of the first user statement, and the first dialog type is a chit-chat dialog, a task-oriented dialog, a question answering dialog, or a retrieval dialog.

For a specific description of the obtaining module 902, refer to the description of step 701 in the foregoing embodiment. Details are not described herein again.

The apparatus further includes a state generation module 904, configured to determine first state information of the first user statement based on the first user statement by using a state determining network, where the first state information includes a second dialog type of the first user statement.

For a specific description of the state generation module 904, refer to the description of step 702 in the foregoing embodiment. Details are not described herein again.

The apparatus further includes a response generation module 901, configured to input the first user statement and the first dialog type into a response generation network, to obtain a second response corresponding to the first user statement.

For a specific description of the response generation module 901, refer to the description of step 703 in the foregoing embodiment. Details are not described herein again.

The apparatus further includes a model update module 903, configured to: update the state determining network based on a difference between the first dialog type and the second dialog type; and

update the response generation network based on a difference between the first response and the second response.

For a specific description of the model update module 903, refer to the descriptions of step 704 and step 705 in the foregoing embodiment. Details are not described herein again.

In a possible implementation, the state generation module is specifically configured to:

determine the second dialog type of the first user statement from a plurality of dialog types by using the state determining network, where the plurality of dialog types include at least two of the chit-chat dialog, the task-oriented dialog, the question answering dialog, and the retrieval dialog.

In a possible implementation, the obtaining module is further configured to:

obtain a second user statement, a third dialog type of the second user statement, and a third response corresponding to the second user statement, where the third dialog type is a real type of the second user statement;

the state generation module is further configured to determine second state information of the second user statement based on the second user statement by using the state determining network, where the second state information includes a fourth dialog type of the second user statement, and the fourth dialog type is different from the third dialog type;

the response generation module is further configured to input the second user statement and the third dialog type into the response generation network, to obtain a fourth response corresponding to the second user statement; and

the model update module is further configured to: update the state determining network based on a difference between the fourth dialog type and the third dialog type; and
update the response generation network based on a difference between the fourth response and the third response.

In a possible implementation, the state determining network and the response generation network each are a GPT model, a DialoGPT model, a BART model, or a T5 model.

In a possible implementation, the response generation module is specifically configured to:

obtain, from the first user statement or a database based on the first user statement, a keyword or a key sentence for constructing the response; and
input the first user statement, the first dialog type, and the keyword or the key sentence into the response generation network, to obtain the second response corresponding to the first user statement.

This application provides the response determining apparatus. The apparatus includes: the obtaining module, configured to obtain the first user statement, the first dialog type of the first user statement, and the first response corresponding to the first user statement, where the first dialog type is the real type of the first user statement, and the first dialog type is the chit-chat dialog, the task-oriented dialog, the question answering dialog, or the retrieval dialog; the state generation module, configured to determine the first state information of the first user statement based on the first user statement by using the state determining network, where the first state information includes the second dialog type of the first user statement; the response generation module, configured to input the first user statement and the first dialog type into the response generation network, to obtain the second response corresponding to the first user statement; and the model update module, configured to: update the state determining network based on the difference between the first dialog type and the second dialog type; and update the response generation network based on the difference between the first response and the second response. In this application, a dialog type of a user dialog is identified by using the state determining network, and responses corresponding to different dialog types are generated by reusing the dialog generation network, which is equivalent to processing user statements of different dialog types by using a same model. During model training, modes of a plurality of dialog types can be unified, so that the plurality of dialog types can be trained at the same time, and a trained dialog system has a capability of a plurality of dialog types, thereby reducing model complexity and a model size of the dialog system.

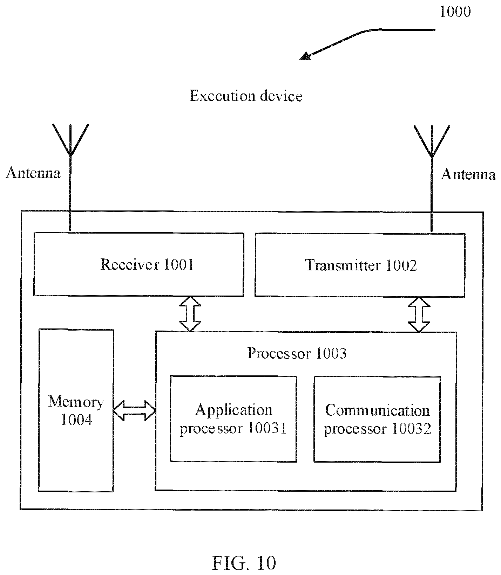

The following describes an execution device provided in embodiments of this application. FIG. 10 is a schematic diagram of a structure of an execution device according to an embodiment of this application. The execution device 1000 may be specifically represented as a mobile phone, a tablet, a notebook computer, an intelligent wearable device, a server, or the like. This is not limited herein. The execution device 1000 may be deployed with the response determining apparatus described in the embodiment corresponding to FIG. 8, to implement a response determining function in the embodiment corresponding to FIG. 8. Specifically, the execution device 1000 includes a receiver 1001, a transmitter 1002, a processor 1003 (there may be one or more processors 1003 in the execution device 1000), and a memory 1004. The processor 1003 may include an application processor 10031 and a communication processor 10032. In some embodiments of this application, the receiver 1001, the transmitter 1002, the processor 1003, and the memory 1004 may be connected through a bus or in another manner.

The memory 1004 may include a read-only memory and a random access memory, and provide instructions and data for the processor 1003. A part of the memory 1004 may further include a non-volatile random access memory (non-volatile random access memory, NVRAM). The memory 1004 stores a processor and operation instructions, an executable module or a data structure, a subnet thereof, or an extended set thereof. The operation instructions may include various operation instructions for various operations.

The processor 1003 controls an operation of the execution device. In specific application, components of the execution device are coupled to each other by using a bus system. In addition to a data bus, the bus system may further include a power bus, a control bus, a state signal bus, and the like. However, for clear description, various types of buses in the figure are marked as the bus system.

The method disclosed in embodiments of this application is applied to the processor 1003, or may be implemented by the processor 1003. The processor 1003 may be an integrated circuit chip, and have a signal processing capability. In an implementation process, steps in the method can be implemented by using a hardware integrated logical circuit in the processor 1003, or by using instructions in a form of software. The processor 1003 may be a processor applicable to an AI operation, such as a general purpose processor, a digital signal processor (digital signal processing, DSP), a microprocessor or a microcontroller, a visual processing unit (vision processing unit, VPU), or a tensor processing unit (tensor processing unit, TPU), and may further include an application-specific integrated circuit (application-specific integrated circuit, ASIC), a field-programmable gate array (field-programmable gate array, FPGA) or another programmable logic device, a discrete gate or a transistor logic device, or a discrete hardware component. The processor 1003 may implement or perform the methods, the steps, and logical block diagrams that are disclosed in embodiments of this application. The general purpose processor may be a microprocessor, or the processor may be any conventional processor, or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1004, and the processor 1003 reads information in the memory 1004 and completes the steps in the foregoing methods in combination with hardware of the processor.

The receiver 1001 may be configured to receive input digital or character information, and generate signal input related to setting and function control of the execution device. The transmitter 1002 may be configured to output digital or character information through a first interface. The transmitter 1002 may be configured to send instructions to a disk group through the first interface, to modify data in the disk group. The transmitter 1002 may further include a display device such as a display.

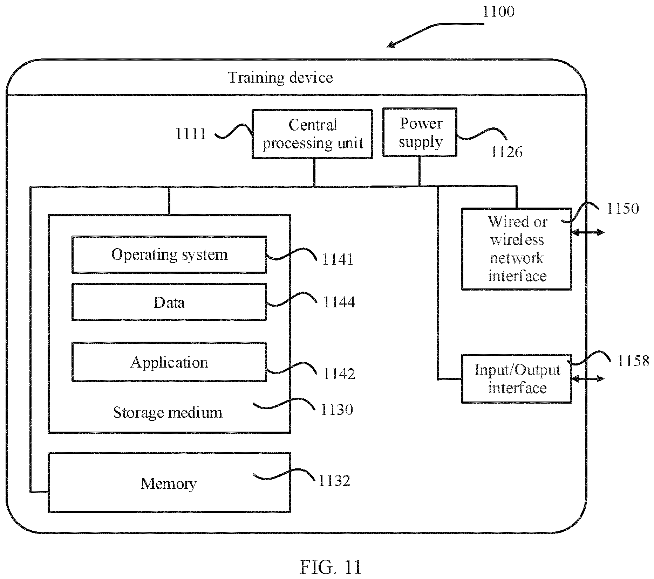

An embodiment of this application further provides a training device. FIG. 11 is a schematic diagram of a structure of the training device according to this embodiment of this application. Specifically, the training device 1100 is implemented by one or more servers. The training device 1100 may vary greatly with configuration or performance, and may include one or more central processing units (central processing units, CPUs) 1111 (for example, one or more processors), a memory 1132, and one or more storage media 1130 (for example, one or more mass storage devices) that store an application 1142 or data 1144. The memory 1132 and the storage medium 1130 may perform transitory storage or persistent storage. Program stored in the storage medium 1130 may include one or more modules (not shown in the figure), and each module may include a series of instruction operations for the training device. Further, the central processing unit 1111 may be configured to communicate with the storage medium 1130, and perform the series of instruction operations in the storage medium 1130 on the training device 1100.

The training device 1100 may further include one or more power supplies 1126, one or more wired or wireless network interfaces 1150, one or more input/output interfaces 1158, or one or more operating systems 1141, for example, Windows Server™, Mac OS X™, Unix™, Linux™, and FreeBSD™.

Specifically, the training device may perform the response determining method in the embodiment corresponding to FIG. 7.

An embodiment of this application further provides a computer program product. When the computer program product runs on a computer, the computer is enabled to perform steps performed by the execution device or steps performed by the training device.

An embodiment of this application further provides a computer-readable storage medium. The computer-readable storage medium stores a program for signal processing. When the program is run on a computer, the computer is enabled to perform steps performed by the execution device or steps performed by the training device.

The execution device, the training device, or the terminal device in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in an execution device performs the data processing method described in the foregoing embodiments, or a chip in a training device performs the data processing method described in the foregoing embodiments. Optionally, the storage unit is a storage unit in the chip, for example, a register or a cache. The storage unit may alternatively be a storage unit that is in a wireless access device and that is outside the chip, for example, a read-only memory (read-only memory, ROM) or another type of static storage device that can store static information and instructions, or a random access memory (random access memory, RAM).

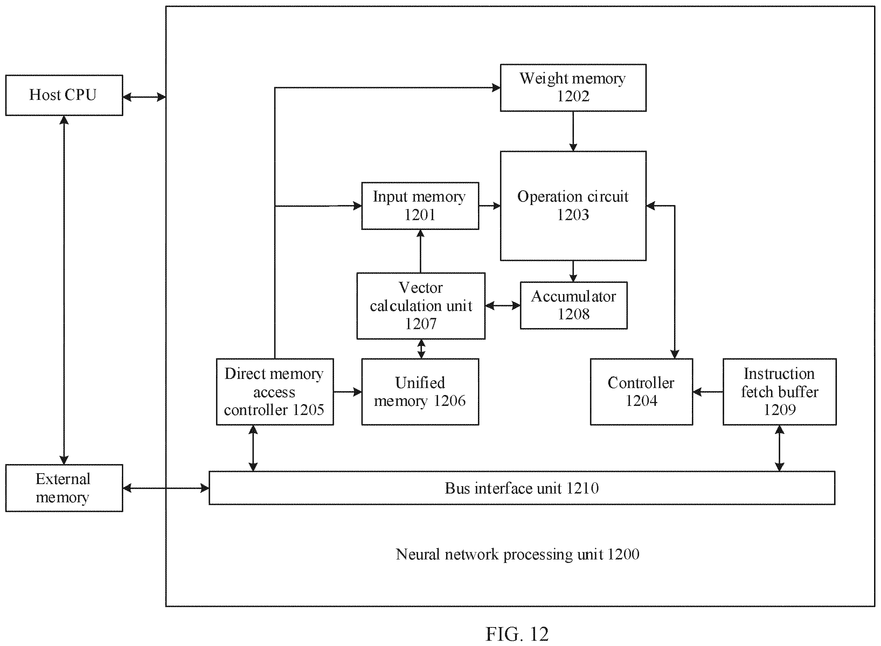

Specifically, FIG. 12 is a schematic diagram of a structure of a chip according to an embodiment of this application. The chip may be represented as a neural network processing unit NPU 1200. The NPU 1200 is mounted to a host CPU (host CPU) as a coprocessor, and the host CPU allocates a task. A core part of the NPU is an operation circuit 1203, and a controller 1204 controls the operation circuit 1203 to extract matrix data in a memory and perform a multiplication operation.

The NPU 1200 may implement, through cooperation between internal components, the response determining method provided in the embodiment described in FIG. 3, or perform inference on a model obtained through training.

The operation circuit 1203 in the NPU 1200 may perform steps of obtaining a model and performing model training on the model.

More specifically, in some implementations, the operation circuit 1203 in the NPU 1200 includes a plurality of process engines (Process Engines, PEs). In some implementations, the operation circuit 1203 is a two-dimensional systolic array. The operation circuit 1203 may alternatively be a one-dimensional systolic array or another electronic circuit capable of performing mathematical operations such as multiplication and addition. In some implementations, the operation circuit 1203 is a general purpose matrix processor.

For example, it is assumed that there is an input matrix A, a weight matrix B, and an output matrix C. The operation circuit fetches, from a weight memory 1202, data corresponding to the matrix B, and caches the data on each PE in the operation circuit. The operation circuit fetches data of the matrix A from an input memory 1201, to perform a matrix operation on the matrix B, and stores an obtained partial result or an obtained final result of the matrix in an accumulator (accumulator) 1208.

A unified memory 1206 is configured to store input data and output data. Weight data is directly transferred to the weight memory 1202 by using a direct memory access controller DMAC (Direct Memory Access Controller, DMAC) 1205. The input data is also transferred to the unified memory 1206 by using the DMAC.

A BIU is a bus interface unit, namely, a bus interface unit 1210, and is configured to perform interaction between an AXI bus, and the DMAC and an instruction fetch buffer (Instruction Fetch Buffer, IFB) 1209.

The bus interface unit (Bus Interface Unit, BIU for short) 1210 is used by the instruction fetch buffer 1209 to obtain instructions from an external memory, and is further used by the direct memory access controller 1205 to obtain original data of the input matrix A or the weight matrix B from the external memory.

The DMAC is mainly configured to transfer input data in the external memory DDR to the unified memory 1206, or transfer the weight data to the weight memory 1202, or transfer the input data to the input memory 1201.

A vector calculation unit 1207 includes a plurality of operation processing units. If required, further processing is performed on output of the operation circuit 1203, for example, vector multiplication, vector addition, an exponential operation, a logarithmic operation, or size comparison. The vector calculation unit 1207 is mainly configured to perform network calculation at a non-convolutional/fully connected layer of a neural network, for example, batch normalization (batch normalization), pixel-level summation, and upsampling a feature map.

In some implementations, the vector calculation unit 1207 can store a processed output vector in the unified memory 1206. For example, the vector calculation unit 1207 may apply a linear function or a nonlinear function to the output of the operation circuit 1203, for example, perform linear interpolation on a feature plane extracted at a convolutional layer. For another example, the linear function or the nonlinear function is applied to a vector of an accumulated value to generate an activation value. In some implementations, the vector calculation unit 1207 generates a normalized value, a pixel-level summation value, or both. In some implementations, the processed output vector can be used as activated input to the operation circuit 1203, for example, the processed output vector can be used at a subsequent layer of the neural network.

The instruction fetch buffer (instruction fetch buffer) 1209 connected to the controller 1204 is configured to store instructions used by the controller 1204.

The unified memory 1206, the input memory 1201, the weight memory 1202, and the instruction fetch buffer 1209 are all on-chip memories. The external memory is private to a hardware architecture of the NPU.

Any processor mentioned above may be a general purpose central processing unit, a microprocessor, an ASIC, or one or more integrated circuits for controlling the program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all of the modules may be selected based on actual requirements to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially, or the part contributing to a conventional technology may be implemented in a form of a software product. The computer software product is stored in a readable storage medium, for example, a floppy disk, a USB flash drive, a removable hard disk, a ROM, a RAM, a magnetic disk, or an optical disc on a computer, and includes several instructions for instructing a computer device (that may be a personal computer, a training device, or a network device) to perform the methods described in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, through a coaxial cable, an optical fiber, or a digital subscriber line (DSL)) or wireless (for example, through infrared, radio, or microwaves) manner. The computer-readable storage medium may be any usable medium accessible by the computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive, Solid State Disk (SSD)), or the like.

**Claims**

1. A response determining method, wherein the method comprises:

   obtaining a to-be-responded first user statement;
   determining first state information of the first user statement based on the first user statement by using a state determining network, wherein the first state information comprises a first dialog type of the first user statement, and the first dialog type is a chit-chat dialog, a task-oriented dialog, a question answering dialog, or a retrieval dialog; and
   inputting the first user statement and the first dialog type into a response generation network, to obtain a response corresponding to the first user statement.

2. The method according to claim 1, wherein the determining first state information of the first user statement based on the first user statement by using a state determining network comprises:
   determining the first dialog type of the first user statement from a plurality of dialog types by using a state determining network, wherein the plurality of dialog types comprise at least two of the chit-chat dialog, the task-oriented dialog, the question answering dialog, and the retrieval dialog.

3. The method according to claim 1 or 2, wherein the method further comprises:

   obtaining a to-be-responded second user statement;
   determining second state information of the second user statement based on the second user statement by using the state determining network, wherein the second state information comprises a second dialog type of the second user statement, the second dialog type is a chit-chat dialog, a task-oriented dialog, a question answering dialog, or a retrieval dialog, and the second dialog type is different from the first dialog type; and
   inputting the second user statement and the second dialog type into the response generation network, to obtain a response corresponding to the second user statement.

4. The method according to any one of claims 1 to 3, wherein the state determining network and the response generation network each are a GPT model, a DialoGPT model, a BART model, or a T5 model.

5. The method according to any one of claims 1 to 4, wherein the inputting the first user statement and the first dialog type into a response generation network, to obtain a response corresponding to the first user statement comprises:

   obtaining, from the first user statement and/or a database based on the first user statement, a keyword or a key sentence for constructing the response; and
   inputting the first user statement, the first dialog type, and the keyword or the key sentence into the response generation network, to obtain the response corresponding to the first user statement.

6. A response determining method, wherein the method comprises:

   obtaining a first user statement, a first dialog type of the first user statement, and a first response corresponding to the first user statement, wherein the first dialog type is a real type of the first user statement, and the first dialog type is a chit-chat dialog, a task-oriented dialog, a question answering dialog, or a retrieval dialog;
   determining first state information of the first user statement based on the first user statement by using a state determining network, wherein the first state information comprises a second dialog type of the first user statement;
   inputting the first user statement and the first dialog type into a response generation network, to obtain a second response corresponding to the first user statement;
updating the state determining network based on a difference between the first dialog type and the second dialog type; and
updating the response generation network based on a difference between the first response and the second response.

7. The method according to claim 6, wherein the determining first state information of the first user statement based on the first user statement by using a state determining network comprises:
determining the second dialog type of the first user statement from a plurality of dialog types by using the state determining network, wherein the plurality of dialog types comprise at least two of the chit-chat dialog, the task-oriented dialog, the question answering dialog, and the retrieval dialog.

8. The method according to claim 6 or 7, wherein the method further comprises:

obtaining a second user statement, a third dialog type of the second user statement, and a third response corresponding to the second user statement, wherein the third dialog type is a real type of the second user statement;
determining second state information of the second user statement based on the second user statement by using the state determining network, wherein the second state information comprises a fourth dialog type of the second user statement, and the fourth dialog type is different from the third dialog type;
inputting the second user statement and the third dialog type into the response generation network, to obtain a fourth response corresponding to the second user statement;
updating the state determining network based on a difference between the fourth dialog type and the third dialog type; and
updating the response generation network based on a difference between the fourth response and the third response.

9. The method according to any one of claims 6 to 8, wherein the state determining network and the response generation network each are a GPT model, a DialoGPT model, a BART model, or a T5 model.

10. The method according to any one of claims 6 to 9, wherein the inputting the first user statement and the first dialog type into a response generation network, to obtain a second response corresponding to the first user statement comprises:

obtaining, from the first user statement or a database based on the first user statement, a keyword or a key sentence for constructing the response; and
inputting the first user statement, the first dialog type, and the keyword or the key sentence into the response generation network, to obtain the second response corresponding to the first user statement.

11. A response determining apparatus, wherein the apparatus comprises:

an obtaining module, configured to obtain a to-be-responded first user statement;
a state generation module, configured to determine first state information of the first user statement based on the first user statement by using a state determining network, wherein the first state information comprises a first dialog type of the first user statement, and the first dialog type is a chit-chat dialog, a task-oriented dialog, a question answering dialog, or a retrieval dialog; and
a response generation module, configured to input the first user statement and the first dialog type into a response generation network, to obtain a response corresponding to the first user statement.

12. The apparatus according to claim 11, wherein the state generation module is specifically configured to:
determine the first dialog type of the first user statement from a plurality of dialog types by using a state determining network, wherein the plurality of dialog types comprise at least two of the chit-chat dialog, the task-oriented dialog, the question answering dialog, and the retrieval dialog.

13. The apparatus according to claim 11 or 12, wherein the obtaining module is further configured to:

obtain a to-be-responded second user statement;
the state generation module is further configured to determine second state information of the second user statement based on the second user statement by using the state determining network, wherein the second state information comprises a second dialog type of the second user statement, the second dialog type is a chit-chat dialog, a task-oriented dialog, a question answering dialog, or a retrieval dialog, and the second dialog type is different from the first dialog type; and

the response generation module is further configured to input the second user statement and the second dialog type into the response generation network, to obtain a response corresponding to the second user statement.

14. The apparatus according to any one of claims 11 to 13, wherein the state determining network and the response generation network each are a GPT model, a DialoGPT model, a BART model, or a T5 model.

15. The apparatus according to any one of claims 11 to 14, wherein the response generation module is specifically configured to:

obtain, from the first user statement or a database based on the first user statement, a keyword or a key sentence for constructing the response; and
input the first user statement, the first dialog type, and the keyword or the key sentence into the response generation network, to obtain the response corresponding to the first user statement.

16. A response determining apparatus, wherein the apparatus comprises:

an obtaining module, configured to obtain a first user statement, a first dialog type of the first user statement, and a first response corresponding to the first user statement, wherein the first dialog type is a real type of the first user statement, and the first dialog type is a chit-chat dialog, a task-oriented dialog, a question answering dialog, or a retrieval dialog;
a state generation module, configured to determine first state information of the first user statement based on the first user statement by using a state determining network, wherein the first state information comprises a second dialog type of the first user statement;
a response generation module, configured to input the first user statement and the first dialog type into a response generation network, to obtain a second response corresponding to the first user statement; and
a model update module, configured to: update the state determining network based on a difference between the first dialog type and the second dialog type; and
update the response generation network based on a difference between the first response and the second response.

17. The apparatus according to claim 16, wherein the state generation module is specifically configured to:
determine the second dialog type of the first user statement from a plurality of dialog types by using the state determining network, wherein the plurality of dialog types comprise at least two of the chit-chat dialog, the task-oriented dialog, the question answering dialog, and the retrieval dialog.

18. The apparatus according to claim 16 or 17, wherein the obtaining module is further configured to:

obtain a second user statement, a third dialog type of the second user statement, and a third response corresponding to the second user statement, wherein the third dialog type is a real type of the second user statement;
the state generation module is further configured to determine second state information of the second user statement based on the second user statement by using the state determining network, wherein the second state information comprises a fourth dialog type of the second user statement, and the fourth dialog type is different from the third dialog type;
the response generation module is further configured to input the second user statement and the third dialog type into the response generation network, to obtain a fourth response corresponding to the second user statement; and
the model update module is further configured to: update the state determining network based on a difference between the fourth dialog type and the third dialog type; and
update the response generation network based on a difference between the fourth response and the third response.

19. The apparatus according to any one of claims 16 to 18, wherein the state determining network and the response generation network each are a GPT model, a DialoGPT model, a BART model, or a T5 model.

**20.** The apparatus according to any one of claims 16 to 19, wherein the response generation module is specifically configured to:

obtain, from the first user statement or a database based on the first user statement, a keyword or a key sentence for constructing the response; and
input the first user statement, the first dialog type, and the keyword or the key sentence into the response generation network, to obtain the second response corresponding to the first user statement.

**21.** A response determining apparatus, wherein the apparatus comprises a memory and a processor, the memory stores code, and the processor is configured to obtain the code and perform the method according to any one of claims 1 to 10.

**22.** A computer storage medium, wherein the computer storage medium stores one or more instructions, and when the instructions are executed by one or more computers, the one or more computers are enabled to perform the method according to any one of claims 1 to 10.

**23.** A computer program product, comprising code, wherein when the code is executed, the computer program product is configured to implement the method according to any one of claims 1 to 10.

FIG. 1

FIG. 2

Obtain a to-be-responded first user statement — 301

Determine first state information of the first user statement based on the first user statement by using a state determining network, where the first state information includes a first dialog type of the first user statement, and the first dialog type is a chit-chat dialog, a task-oriented dialog, a question answering dialog, or a retrieval dialog — 302

Input the first user statement and the first dialog type into a response generation network, to obtain a response corresponding to the first user statement — 303

FIG. 3

Book a flight to Beijing
tomorrow

User

Dialog
system

There is a flight from Shenzhen
to Beijing at 8 o'clock tomorrow.
Do you want to make a
reservation?

OK

User

Dialog
system

The flight is reserved for you.
Do you need any other help?

No, thank you

User

FIG. 4

FIG. 5

FIG. 6

Obtain a first user statement, a first dialog type of the first user statement, and a first response corresponding to the first user statement, where the first dialog type is a real type of the first user statement, and the first dialog type is a chit-chat dialog, a task-oriented dialog, a question answering dialog, or a retrieval dialog — 701

Determine first state information of the first user statement based on the first user statement by using a state determining network, where the first state information includes a second dialog type of the first user statement — 702

Input the first user statement and the first dialog type into a response generation network, to obtain a second response corresponding to the first user statement — 703

Update the state determining network based on a difference between the first dialog type and the second dialog type — 704

Update the response generation network based on a difference between the first response and the second response — 705

FIG. 7

800

802                                                802

Obtaining module ——— State generation module

803

Response generation module

FIG. 8

900

901                          902                          904

Response generation module ——— Obtaining module ——— State generation module

903

Model update module

FIG. 9

1000

Execution device

Antenna                                    Antenna

| Receiver 1001 | Transmitter 1002 |
|---|---|

Processor 1003

| Memory 1004 | Application processor 10031 | Communication processor 10032 |
|---|---|---|

FIG. 10

1100

Training device

1111 | Central processing unit | Power supply | 1126

Operating system | 1141

Data | 1144

Application | 1142

Storage medium | 1130

Memory | 1132

Wired or wireless network interface | 1150

Input/Output interface | 1158

FIG. 11

FIG. 12

## INTERNATIONAL SEARCH REPORT

| International application No. |
| --- |
| **PCT/CN2022/125088** |

**A.    CLASSIFICATION OF SUBJECT MATTER**

G06F 16/33(2019.01)i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, EPODOC, WPI, IEEE, CNKI: 语句, 回复, 问答, 答复, 检索, 任务, 聊天, 闲聊, 对话, 更新, 类别, 类型, 生成网络, dialogue, reply, question, answer, search, task, chat, update, type, generate network, GPT

**C.    DOCUMENTS CONSIDERED TO BE RELEVANT**

| Category* | Citation of document, with indication, where appropriate, of the relevant passages | Relevant to claim No. |
| --- | --- | --- |
| X | CN 112100353 A (BOE TECHNOLOGY GROUP CO., LTD.) 18 December 2020 (2020-12-18)<br>claims 1-13, and description, paragraphs [0059]-[0124] and [0148]-[0154] | 1-23 |
| X | CN 111611365 A (SHANGHAI MACROWING SOFTWARE TECHNOLOGY CO., LTD.) 01 September 2020 (2020-09-01)<br>claims 1-10, and description, paragraphs [0044]-[0079] | 1-23 |
| A | CN 110347792 A (TENCENT TECHNOLOGY SHENZHEN CO., LTD.) 18 October 2019 (2019-10-18)<br>entire document | 1-23 |
| A | CN 110209784 A (TENCENT TECHNOLOGY SHENZHEN CO., LTD.) 06 September 2019 (2019-09-06)<br>entire document | 1-23 |
| A | US 2021043207 A1 (MICROSOFT TECHNOLOGY LICENSING, LLC) 11 February 2021 (2021-02-11)<br>entire document | 1-23 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 November 2022** | **28 November 2022** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/125088**

| Patent document cited in search report | | | Publication date (day/month/year) | Patent family member(s) | | | Publication date (day/month/year) |
|---|---|---|---|---|---|---|---|
| CN | 112100353 | A | 18 December 2020 | None | | | |
| CN | 111611365 | A | 01 September 2020 | None | | | |
| CN | 110347792 | A | 18 October 2019 | None | | | |
| CN | 110209784 | A | 06 September 2019 | None | | | |
| US | 2021043207 | A1 | 11 February 2021 | EP | 3785144 | A1 | 03 March 2021 |
| | | | | WO | 2019209501 | A1 | 31 October 2019 |
| | | | | CN | 110399470 | A | 01 November 2019 |

**EP 4 404 080 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111205658